# EUROPEAN PATENT SPECIFICATION

(11) **EP 3 767 242 B1**
(45) Date of publication and mention of the grant of the patent: **12.10.2022**
(21) Application number: 19187014.6
(22) Date of filing: 18.07.2019
(51) Int. Cl.: G01D 5/20, G01D 5/22, G01D 5/14, G01B 7/00, G01B 7/30

(54) **DETERMINATION OF AXIAL AND ROTARY POSITIONS OF A BODY**
BESTIMMUNG VON AXIAL- UND DREHPOSITIONEN EINES KÖRPERS
DÉTERMINATION DES POSITIONS AXIALES ET ROTATIVES D'UN CORPS

(43) Date of publication of application: 20.01.2021
(73) Proprietor: Mecos AG, 8005 Zürich (CH)
(72) Inventor: BÜHLER, Philipp, 8006 Zürich (CH)
(74) Representative: Detken, Andreas

(56) References cited:
- EP-A1- 2 180 296
- WO-A1-2004/048883
- WO-A2-2018/217356
- US-A1- 2018 224 301
- US-B2- 9 752 899

## Description

### TECHNICAL FIELD

The present invention relates to a sensor device for determining at least one of the axial and rotary positions of a body, and to a corresponding method.

### PRIOR ART

WO 2004/048883 A1 discloses a sensor device for determining the position of a body along multiple degrees of freedom. An excitation coil extends around an electrically conductive body. A plurality of pickup coils or other magnetic field sensors are placed in the vicinity of the excitation coil at different angular positions along the circumference of the body. A high-frequency current is fed to the excitation coil, thus generating a high-frequency magnetic field. Eddy currents are generated in the conductive body as a result of the high-frequency magnetic field. The eddy currents prevent the high-frequency magnetic field from entering the bulk of the body. The magnetic field lines are therefore concentrated in the gap between the excitation coil and the body. Movements of the body will change the magnetic field distribution. These changes are picked up by the pickup coils. When the body moves in one direction so as to decrease the size of the gap on one side of the body, the magnetic field distribution will essentially move in the opposite direction, such that a pickup coil on the side where the gap size increases will receive a larger signal. If the average gap size between the excitation coil and the body is small compared to its diameter, the movement of the magnetic field distribution can be much larger than the movement of the body. This leads to high sensitivity of the device.

WO 2004/048883 A1 further suggests determining the axial position of a rotationally symmetric body along its symmetry axis by providing an annular axial flange surface on the body, the surface normal of the flange surface extending along the symmetry axis of the body, and arranging the excitation coil and/or pickup coils axially opposite the flange surface (see Figs. 7 and 8 of WO 2004/048883 A1). The size of the axial gap between the flange surface and the coils is evaluated by determining the sum of the signals of all the pickup coils that are distributed around the body, or by evaluating the impedance of the excitation coil. However, it can be difficult to assemble a rotary machine comprising such an axial sensor device because the coils cannot be moved axially past the flange surface. Furthermore, it is not possible to determine a rotary position of a rotationally symmetric body with this kind of arrangement.

WO 2006/074560 A2 discloses an axial position sensor that comprises at least two coplanar, concentric sensor coils. The sensor coils are arranged around the rotation axis of a thrust disk, axially facing the thrust disk. They are operated such that magnetic fields generated by the sensor coils cancel at least partially in the regions inside the innermost sensor coil and outside the outmost sensor coil. For detecting a rotary state of the thrust disk, several pickup coils are provided in the vicinity of the sensor coils or of a separate excitation coil. The pickup coils detect a rotary position of a notch that is provided on the thrust disk or on a shaft that carries the thrust disk.

Concerning the determination of axial position, the sensor proposed in WO 2006/074560 A2 has the same disadvantages as the axial position sensor disclosed in WO 2004/048883 A1 in that it requires the coils to axially face a target. Furthermore, concerning the determination of rotary position, the sensor requires a notch near the pickup coils, which can interfere with the determination of the axial position.

US 2018/0224301 A1 discloses an angular position sensor that includes a stator element with at least three coils, a rotor element rotatably mounted with respect to the stator element, and an evaluation unit configured to determine an angle of rotation between the rotor element and stator element.

US 9,752,899 B2 discloses an inductive position detection device. A coil section includes a primary coil which is magnetically excitable by an AC signal, and secondary coils which are provided so as to generate an inductive output in response to excitation of the primary coil. A self-oscillation circuit, including an inductance element and a capacitor, has incorporated therein the primary coil as the inductance element for self-oscillation. A target section is provided in such a manner that its relative position to the coil section varies according to a position of a target of detection, and the target section includes a magnetically responsive member disposed so that inductance of the secondary coils is varied according to the relative position. Amplitude levels of the output signals of the secondary coils are extracted, and position data of the position of the target of detection is obtained on the basis of these amplitude levels.

### SUMMARY OF THE INVENTION

It is an object of the present invention to provide a sensor device for determining an axial position of a body along a longitudinal axis that can be used very flexibly, in particular, by not requiring any sensor coils to be arranged axially opposite a flange surface that has an axial surface normal.

This and other objects are achieved by a sensor device as defined in claim 1, and by a method as defined in claim 13.

Advantageous embodiments of the invention are laid down in the dependent claims.

A sensor device as defined in claim 1 for determining an axial position of a body along a longitudinal axis is provided, the sensor device comprising:
at least one excitation coil that extends around the longitudinal axis (i.e., the turns of the excitation coil essentially enclose the longitudinal axis);
at least one first detection coil arranged in the vicinity of the excitation coil essentially in a first detection plane perpendicular to the longitudinal axis;
at least one second detection coil arranged in the vicinity of the excitation coil essentially in a second detection plane perpendicular to the longitudinal axis, the second detection plane being arranged at an axial distance to the first detection plane;
excitation circuitry configured to supply the excitation coil with current at an excitation frequency to create an excitation magnetic field distribution; and
detection circuitry configured to determine the axial position of the body based on at least one difference between signals from the at least one first detection coil and signals from the at least one second detection coil at the excitation frequency.

In a particularly simple embodiment, the sensor device comprises one first detection coil and one second detection coil, both detection coils extending around the longitudinal axis. This embodiment is particularly suitable if it is desired to only determine the axial position of the body.

In other embodiments, the sensor device comprises a plurality of first detection coils arranged essentially in the first detection plane at a plurality of different angular positions around the longitudinal axis (i.e., at different angular positions along the circumference of the excitation coil), and a plurality of second detection coils arranged essentially in the second detection plane perpendicular to the longitudinal axis at a plurality of different angular positions around the longitudinal axis. In such embodiments, each of the first and second detection coils preferably does not extend around the longitudinal axis. In such embodiments, it is possible to determine a position of the body not only along the axial direction, but also along at least one additional degree of freedom, using the first and second detection coils, as will be discussed in more detail below.

The first and second detection coils can be arranged to form pairs of axially opposing first and second detection coils. In this case, the first detection coil and the second detection coil of each pair are preferably congruent in a projection along the longitudinal axis. The determination of the axial position can then be based on a sum over all differences between signals from each pair of axially opposing first and second detection coils, or, equivalently, on the difference between the sum of the signals from all first detection coils and the sum of the signals from all second detection coils. The sums and differences can be formed by the wiring scheme, i.e., by connecting the coils in series and anti-series configuration such that the desired sums and differences are obtained, by analog hardware (e.g., by analog adders and subtracters), by digital hard- and software (e.g. by digitizing the signals from the detection coils and adding and subtracting them in software), or by a combination of these possibilities.

In some embodiments, the sensor device further comprises a plurality of third detection coils arranged in the vicinity of the excitation coil at a plurality of different angular positions around the longitudinal axis. These additional detection coils can then be used to determine the position of the body along at least one degree of freedom different from the axial direction instead of or in addition to the first and second detection coils.

In some embodiments, the detection circuitry is configured to determine, in addition to the axial position of the body, a radial position of the body along at least one radial direction. Such a determination may be based on at least one sum of the signals that are detected by the first detection coils and the signals that are detected by the second detection coils. In particular, sums may be formed for the signals from each pair of axially opposing first and second detection coils, and linear combinations may be formed of such sums for pairs that are arranged at different angular positions around the longitudinal axis (i.e., along the circumference of the body or, equivalently, along the circumference of the excitation coil). In other embodiments, the determination of radial position may be based on signals from the third detection coils. Also in this case, linear combinations may be formed of the signals from third detection coils at different angular positions along the circumference of the body.

In some embodiments, the detection circuitry is configured to determine, in addition to the axial position of the body, a tilt position of the body (in particular, of its longitudinal axis relative to the detection planes) around at least one radial tilt axis. Such a determination may be based on a comparison of at least two differences between signals that are detected by the first detection coils and signals that are detected by the second detection coils, each difference being formed from signals for a different angular position around the longitudinal axis.

The excitation coil is preferably arranged in a symmetric manner with respect to the detection planes. In particular, it can be arranged between the detection planes. In some embodiments, the excitation coil is arranged essentially in an excitation plane, the excitation plane being arranged between the first and second detection planes and preferably equidistantly from the first and second detection planes. In such embodiments, the excitation and detection coils can radially overlap in a projection along the longitudinal direction. In other embodiments, the excitation coil comprises first and second windings, the first winding being arranged essentially in the first detection plane, and the second winding being arranged essentially in the second detection plane. In such embodiments, it is preferred that the first detection coils are arranged radially outside the first winding, and the second detection coils are arranged radially outside the second winding. Other relative arrangements of the excitation and detection coils are of course possible as well.

In the context of the present disclosure, two coils are to be understood to be arranged "in the vicinity" of one another if they are inductively coupled, such that an AC current in one of the coils induces an appreciable AC voltage in the other coil. Generally, the axial and radial distances between the excitation coil and each detection coil should not be larger than 50 mm, more preferably not more than 20 mm. Typically, in particular the axial distances will be much smaller than this, e.g., less than 10 mm or even less than 5 mm.

In the context of the present disclosure, a coil is to be understood to be arranged "essentially" in a certain plane (e.g., in the first or second detection plane or in the excitation plane) if the average axial distance of the turns of the coil from said plane is significantly smaller than the axial distance between the first and second detection planes. In particular, the average distance of the turns of coil from said plane is preferably not more than 25% of the distance between the detection planes. Likewise, two coils are to be understood to be arranged "essentially" in the same plane if their axial distance is significantly smaller than the axial distance between the first and second detection planes, in particular, less than 25% of the latter axial distance.

The axial distance between the first and second detection planes will typically be on the size of one to a few millimeters; however, in some embodiments, it can also be significantly larger. In particular, said axial distance is preferably at least 1 mm, more preferably at least 1.5 mm or at least 2 mm.

The sensor device is advantageously used in conjunction with an electrically conductive target on the body that has, on its outer circumference, at least one radial dimension that varies along the longitudinal axis. The excitation coil extends around the circumference of the target, i.e., the target is arranged radially inside the excitation coil. The excitation coil is arranged sufficiently close to the target that the excitation magnetic field distribution excites eddy currents in the target. The eddy currents prevent the excitation magnetic field distribution from entering the bulk of the target (except for a thin zone at the surface having a thickness on the scale of the so-called skin depth). Axial movements of the target will therefore change the magnetic field distribution around the target. The magnetic field distribution is detected by the detection coils. By forming differences between signals from detection coils in two different, axially spaced detection planes, a very sensitive measure of axial position can be obtained.

The target can be formed as a separate element that is configured to be connected with the body, or it can be an integral part of the body. In advantageous embodiments, the target comprises a radially protruding ring on a circumferential surface of the body, extending around the longitudinal axis. In other embodiments, the target comprises an annular notch in a circumferential surface of the body, the notch extending around the longitudinal axis. Advantageously, the ring or notch has a length along the axial direction that is between 50% to 200%, preferably 67% to 150%, more preferably 80% to 125% and most preferably 90% to 110% of the axial distance between the first and second detection planes. The ring or notch, on its outer circumference, can define first and second circumferential edge structures having opposite axial orientations and having an axial distance that is 50% to 200%, preferably 67% to 150%, more preferably 80% to 125% and most preferably 90% to 110% of the axial distance between the first and second detection planes. In this manner, axial movements of the target affect the magnetic field distribution particularly strongly, resulting in high sensitivity of the sensor device.

In order to achieve high sensitivity of the sensor device, there is preferably only a small radial gap between the excitation coil and the target. If the target is rotationally symmetric, the minimal average gap size (averaged over all angular position around the longitudinal axis, minimum of this average taken over all axial positions of the target along the longitudinal axis) is preferably not more than 10%, more preferably not more than 5% of the outer diameter of the target. In absolute terms, the average gap size is preferably not more than 5 mm, in particular, not more than 2 mm.

In order to simplify assembly and disassembly of a machine that comprises the sensor device, the excitation coil and the detection coils, in a projection along the longitudinal direction, do not radially overlap with the target or at least not with those portions of the target in which the eddy currents are excited. In particular, it is preferred that the target does not comprise an axial flange surface that axially faces the excitation and/or detection coils. In this manner the relevant portion of the target can easily be inserted into the arrangement of coils and removed therefrom without collision. This does not exclude, of course, that there are other structures on the body that do radially overlap with the coils, for instance, a thrust disk for axial magnetic bearings. What is important is only that these structures do not form the target for the present sensor device, i.e., they are not involved in the measurement process by the sensor device.

The excitation frequency should be comparatively high in order to minimize the skin depth up to which the magnetic field distribution can enter the target and in order to avoid interference from other currents, e.g., control currents. Advantageously, the excitation frequency is at least 100 kHz. In some embodiments, the excitation frequency is at least 200 kHz, at least 500 kHz, at least 1 MHz or even at least 2 MHz. On the other hand, the excitation frequency should not be too high in order to avoid waveguide effects as with microwaves. For instance, the excitation frequency may be chosen to be not more than 100 MHz. In some embodiments, the excitation frequency is not more than 20 MHz or not more than 10 MHz.

In order to avoid that the target forms a magnetic core for the excitation and detection coils, the target is preferably not ferromagnetic, thus improving immunity with respect to external magnetic fields.

The excitation coil and the detection coils are advantageously printed coils formed on at least one printed circuit board, in particular, on a single common printed circuit board or on an assembly of two or more axially stacked printed circuit boards that are connected by some suitable connection structure. The printed circuit board may have a plurality of conductive layers separated by insulating layers, as it is well known in the art. Each coil may be formed in one or more of the conductive layers. If a coil is formed in two conductive layers, each layer carrying the same number of turns of the coil, the coil may be considered to be essentially arranged in a plane that is located between these two layers, to be more precise, in the axial center between these two layers. This concept can be readily generalized to situations where a coil is formed on more than two layers, or where the coil has different numbers of turns in the different layers.

A corresponding method as defined in claim 13 of determining an axial position of a body along a longitudinal axis comprises:
arranging at least one excitation coil around the body, the excitation coil extending around the longitudinal axis;
arranging at least one first detection coil in the vicinity of the excitation coil essentially in a first detection plane perpendicular to the longitudinal axis;
arranging at least one second detection coil in the vicinity of the excitation coil in a second detection plane perpendicular to the longitudinal axis, the second detection plane being arranged at an axial distance to the first detection plane;
supplying the excitation coil with current at an excitation frequency to create an excitation magnetic field distribution; and
determining the axial position of the body based on at least one difference between signals that are detected by the at least one first detection coil and signals that are detected by the at least one second detection coil at the excitation frequency.

All considerations about the possible arrangements of the excitation and detection coils relative to one another discussed above in conjunction with the sensor device of the present invention are also applicable to the method of the present invention. The method can further comprise determining, in addition to the axial position of the body, a radial position of the body along at least one radial direction and/or a tilt position of the body around at least one radial tilt axis, as discussed above.

In some embodiments, the sensor device additionally allows a determination of a rotary position of the body with respect to a rotation about a longitudinal axis of the body, wherein the sensor device is able to determine the rotary position of the body even if the body has rotationally symmetric shape.

To this end, the sensor device may comprise at least one magnetic field sensor, the magnetic field sensor being arranged on the at least one printed circuit board together with at least one of the excitation coil and/or detection coils, the at least one magnetic field sensor being configured to detect a stray magnetic field of a magnet carried by the body, and the detection circuitry may be configured to operate the at least one magnetic field sensor to determine a rotary position of the body around the longitudinal axis, based on signals from the at least one magnetic field sensor.

In many rotary electric machines, a strong permanent magnet or an electromagnet that is supplied with a DC current is present on the rotor body for interaction with stator coils to form an electric motor or generator. One or more magnetic field sensors may be arranged on a common printed circuit board together with at least one coil of the axial sensor. These magnetic field sensors pick up the stray field from such a magnet on the rotor body. The signals from the magnetic field sensors are used to determine the rotary position of the rotor body. Therefore there is no need to provide a notch on the body that would destroy rotational symmetry of the rotor body. Furthermore it is not necessary to provide a separate printed circuit board for the magnetic field sensors. Thereby complexity and space requirements are reduced.

In some embodiments, a single multi-axis magnetic field sensor is employed. In other embodiments, a plurality of single- or multi-axis magnetic field sensors is employed. In this case the magnetic field sensors are advantageously arranged on the at least one printed circuit board at a plurality of different angular positions around the longitudinal axis. In some embodiments, the detection circuitry is configured to determine linear combinations of signals from magnetic field sensors disposed at different angular positions around the longitudinal axis in order to correct for the influence of radial displacements of the body. In order to avoid that magnetic field sensors that are disposed on the same printed circuit board as the detection coils overlap with the detection coils, the magnetic field sensors are advantageously arranged at angular positions that are located between adjacent detection coils.

The magnetic field sensors can be any type of sensor that is capable of detecting a low-frequency magnetic field, such as Hall or magnetoresistive sensors. The magnetic field sensors are operated in a frequency range that is determined by the rotation frequency of the body about its longitudinal axis, which is typically on the scale of less than a few kHz and certainly much lower than the excitation frequency that is supplied to the excitation coil, which is typically above 100 kHz. Accordingly, advantageously the magnetic field sensors have an operating bandwidth that is below the excitation frequency of the excitation magnetic field distribution. In the alternative or in addition, the detection circuitry may comprise at least one frequency filter for filtering out the excitation frequency from the signals detected by the magnetic field sensors.

The detection circuitry can further be configured to correct at least one magnetic field signal from at least one of the magnetic field sensors based on the radial position of the body as determined from the signals received from the detection coils at the excitation frequency.

The method may comprise further detecting a stray magnetic field of a magnet carried by the body using at least two magnetic field sensors, the magnetic field sensors being arranged together with the excitation coil and/or detection coils on a printed circuit board at at least two different angular positions around the longitudinal axis, the excitation and detection coils being formed as printed coils on said printed circuit board; and
determining a rotary position of the body around the longitudinal axis, based on the stray magnetic field.

The method can comprise correcting at least one magnetic field signal from at least one of the magnetic field sensors, based on the radial position of the body as determined from the signals received from the detection coils at the excitation frequency.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows, in a highly schematic manner, parts of a rotary electric machine that comprises a sensor device according to an embodiment of the invention in a perspective view;
- Fig. 2: shows, in a highly schematic manner, a central longitudinal section through a sensor device according to the first embodiment;
- Fig. 3: shows, in a highly schematic manner, a central longitudinal section through a sensor device according to a second embodiment;
- Fig. 4: shows, in a highly schematic manner, a central longitudinal section through a sensor device according to a third embodiment;
- Fig. 5: shows, in a highly schematic manner, a top view of a sensor device according to the second embodiment;
- Fig. 6: shows, in a highly schematic manner, a top view of a sensor device according to a fourth embodiment; and
- Fig. 7: shows an exemplary block diagram of excitation and detection circuitry, illustrating operation of a sensor according to the present invention.

### DESCRIPTION OF PREFERRED EMBODIMENTS

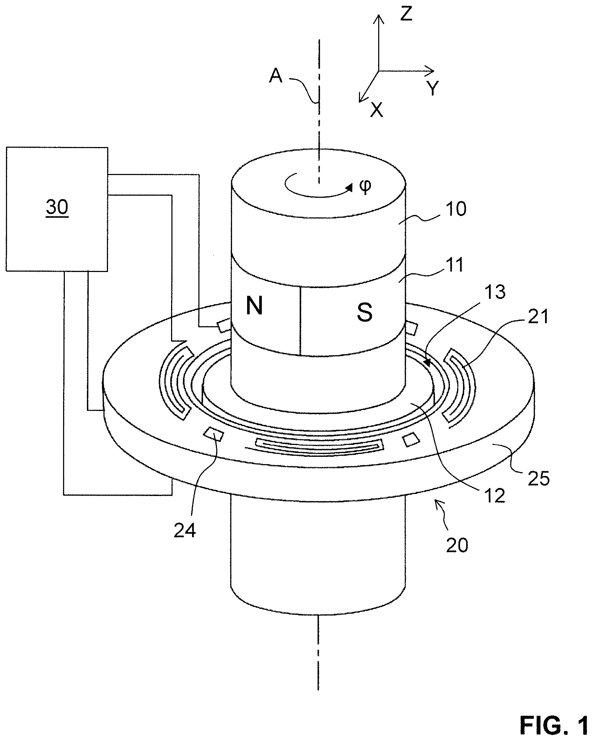

Figure 1 shows, in a highly schematic manner, parts of a rotary electric machine that comprises a sensor device according to an embodiment of the invention. It is to be understood that Fig. 1 is not to scale.

The rotary electric machine comprises a rotor body 10. The rotor body 10 is supported in a stator (not shown) for rotation about a rotation axis A, corresponding to a longitudinal axis of the rotor body 10. The rotor body 10 is supported in the stator by bearings (not shown). The bearings can be magnetic bearings, in particular, active magnetic bearings.

A permanent magnet 11 having a north pole N and a south pole S is mounted on the rotor body 10 for interaction with stator windings (not shown) on the stator. The stator windings and the permanent magnet 11 together form an electric motor or generator. The direction of magnetization of the permanent magnet 11 is transverse to the rotation axis A.

The following directions are defined in Fig. 1: The Z direction designates the nominal direction of the rotation axis A, i.e., the rotation axis A extends along the Z direction in an equilibrium position of the rotor body 10. Deviations of the rotation axis A from the Z direction are called a "tilt" of the rotor body 10. In the present example, the Z direction is a vertical direction; however, the Z direction can have arbitrary orientation in space. The X and Y directions are called radial directions. In the present example, they are horizontal directions. The X, Y and Z directions are mutually perpendicular. The rotary position of the rotor about the A axis is designated as the rotation angle ϕ.

The rotary machine comprises a sensor device 20 for determining the radial, axial, tilt and rotary positions of the rotor body relative to the stator at the location of the sensor device. The sensor device 20 comprises a multi-layer printed circuit board (PCB) 25. The printed circuit board 25 has annular shape, defining a central opening. The rotor 10 passes through the opening. Instead of a single printed circuit board, it is also conceivable that a stack of two or more separate printed circuit boards is provided, and that the printed circuit boards in the stack are connected together and optionally axially spaced by spacers.

The printed circuit board 25 carries a plurality of kidney-shaped first detection coils 21. In the present example, there are four first detection coils 21. However, in other embodiments, there can also be three, five, six or more first detection coils. The first detection coils 21 are arranged essentially in a common first detection plane. They can be formed, e.g., in a top layer of the printed circuit board 25 or in two or more of the topmost layers. Each first detection coil 21 does not enclose the rotor body 10. The first detection coils 21 are arranged at different angular positions along the circumference of the rotor body 10, preferably at equal angular distances from one another. While in the present example adjacent first detection coils do not overlap in the angular direction, it is also possible that there is some degree of overlap in this direction. In this case adjacent first detection coils would have to be provided in different layers. If these layers are sufficiently closely spaced, the first detection coils can still be considered to be disposed essentially in a common first detection plane.

The printed circuit board 25 furthermore carries a plurality of second detection coils, which are disposed essentially in a second detection plane at an axial distance below the first detection plane. For instance, the second detection coils can be disposed in a bottom layer of the printed circuit board 25 or in two or more of the bottommost layers. The second detection coils are not visible in Fig. 1. The second detection coils are of similar configuration and are similarly arranged as the first detection coils 21. There is exactly one second detection coil in the second detection plane for each first detection coil 21 in the first detection plane. In a projection along the Z axis, each second detection coil in the second detection plane is essentially congruent with its corresponding first detection coil 21 in the first detection plane. In other words, the sensor device 20 comprises a plurality of pairs of mutually congruent first and second detection coils in two different detection planes. In the present example, there are four such pairs.

The printed circuit board 25 also carries an excitation coil. In the present example, the excitation coil is disposed in one or more central layers of the printed circuit board 25 between the first and second detection planes and is not visible in Fig. 1. The excitation coil extends around the rotor body 10, i.e., its turns encircle the rotation axis A.

Finally, the printed circuit board 25 carries a plurality of magnetic field sensors 24. In the present example, the magnetic field sensors 24 are disposed on the top layer of the printed circuit board 25 in which also turns of the first detection coils 21 are formed; however, it is also conceivable to dispose the magnetic field sensors 24 on the bottom layer of the printed circuit board 25. The magnetic field sensors 24 are arranged at different positions and preferably at equal angular distances along the circumference of the rotor 10. In the present example, there are four such magnetic field sensors 24. Each magnetic field sensor 24 is arranged between two adjacent first detection coils 21 along the circumference of the rotor 10.

On its circumferential surface, the rotor body 10 carries a target ring 12 of electrically conductive, non-ferromagnetic material, e.g., made of copper or aluminum. The target ring 12 forms a target for the excitation and detection coils of the sensor device 20. The target ring 12 may be made separately from the rotor body 10, or it may be an integral part of the rotor body 10. In the latter case the entire rotor body would be electrically conductive. Instead of being ring-shaped, the target can have a different shape; in particular, it can be disk-shaped. The target ring 12 is disposed radially inside the central opening of the printed circuit board 25. An annular radial gap 13 is present between the target ring 12 and the inner circumference of the annular printed circuit board 25. The target ring 12 is axially spaced from the permanent magnet 11.

Processing circuitry 30 is connected to the excitation coil, to the detection coils, and to the magnetic field sensors. Operation of the processing circuitry will be discussed in more detail below.

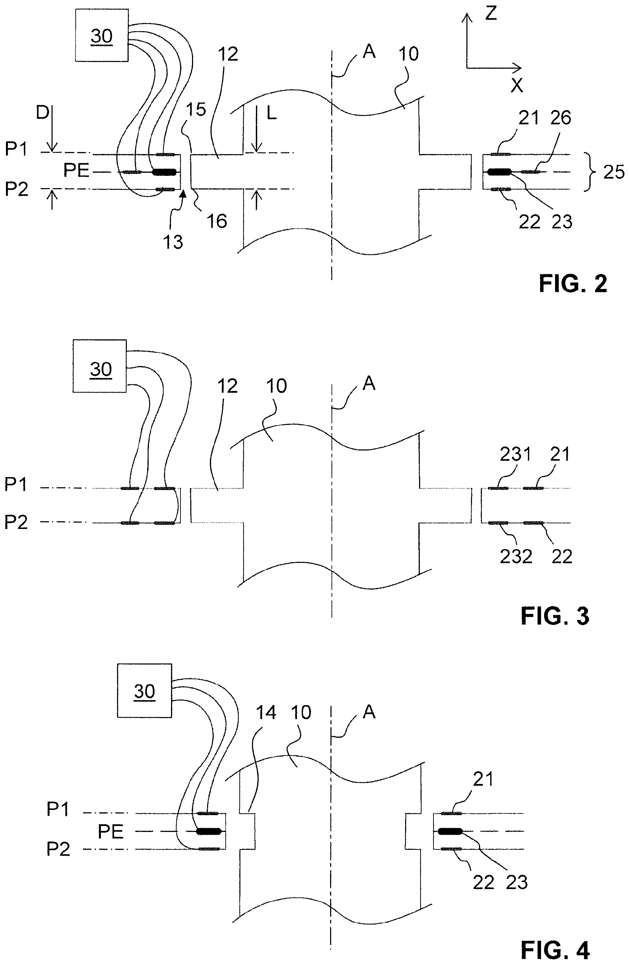

A possible arrangement of the excitation coil and the detection coils will now be described with reference to Fig. 2.

In Fig. 2, the printed circuit board 25 defines three different planes. Each of these planes extends perpendicular to the Z direction. The first detection coils 21 are arranged in a first detection plane P1. The second detection coils 22 are arranged in a second detection plane P2. The first and second detection planes P1, P2 are axially spaced by a non-zero distance D. The excitation coil 23 is arranged in an excitation plane PE. The excitation plane is axially located in the center between the detection planes P1 and P2. The excitation coil 23 overlaps with the first and second detection coils 21, 22 in a projection along the Z axis. In this example, additional third detection coils 26 are arranged in the excitation plane PE radially outside from the excitation coil. The purpose of the additional coils will be explained further below.

The excitation and detection planes do not necessarily coincide with a particular conductive layer of the printed circuit board. If each of the excitation and/or detection coils has turns in more two or more adjacent conductive layers, each of the planes PE, P1 and P2 may be defined by two or more such adjacent layers of the printed circuit board, e.g., the first detection plane P1 may be defined by the two uppermost layers of the printed circuit board and in this case may be considered to be located between these two layers.

The target ring 12 has a length L along the rotational direction A that essentially corresponds to the distance D between the first and second detection planes P1, P2 along the Z direction. At its outer circumference, the target ring 12 has two oppositely oriented circumferential edge structures: A first (upper) circumferential edge 15 is present where the outer circumferential surface of the target ring 12 meets the upper axial end face of the target ring 12. A second (lower) circumferential edge 16 is present where the outer circumferential surface of the target ring 12 meets the lower axial end face of the target ring 12. These edges have opposite orientations along the rotation axis A.

In operation, the processing circuitry 30 supplies the excitation coil with a high-frequency current at an excitation frequency, which is typically in the range of 100 kHz to 100 MHz.

The current creates a high-frequency excitation magnetic field distribution. The magnetic field distribution excites eddy currents in the target ring. The eddy currents prevent the magnetic field distribution from entering the bulk of the target ring. This leads to a concentration of the magnetic field distribution in the radial gap 13 between the excitation coil 23 and the circumferential surface of the target ring 12.

Radial displacements of the rotor body 10 along some radial direction decrease the gap size on one radial side and increase the gap size on the opposite radial side of the target ring 12. This leads to a displacement of the magnetic field distribution in a direction opposite to the direction of movement of the target ring 12. As a result, the first and second detection coils 21, 22 on the one radial side receive a smaller signal than the first and second detection coils 21, 22 on the other radial side. The radial displacement can be determined based on this difference.

Axial displacements of the rotor body 10 change the axial position of the target ring 12 inside the printed circuit board 25. An upward displacement of the rotor body 10 along the positive Z direction causes the target ring 12 to move upward as well. Thereby the lower circumferential edge 16 moves up to an axial position between the detection planes P1 and P2, while the upper circumferential edge 15 moves up to an axial position that is above the first (upper) detection plane P1. Thereby the magnetic field distribution will change, such that the magnetic field at the position of any one of the first (upper) detection coils 21 will be different from the magnetic field at the position of the corresponding second (lower) detection coil 22. The overall axial displacement of the rotor body 10 can be determined based on this signal difference. In particular, the difference can be summed up over all pairs of detection coils along the circumference of the target ring 12.

Tilt displacements of the rotor body 10 can be determined by comparing the signal difference of a pair of detection coils on one radial side of the rotor body to the signal difference of a pair of detection coils on the opposite radial side.

Fig. 3 illustrates a second embodiment. The excitation coil 23 has two windings 231, 232. The first winding 231 is disposed in the first detection plane P1, radially inside of the first detection coils 21. The second winding 232 is disposed in the second detection plane P2, radially inside of the second detection coils 22. The windings 231, 232 have the same numbers of turns. They are connected in series.

Fig. 4 illustrates a third embodiment. The excitation and detection coils are arranged as in the first embodiment. However, instead of a target ring 12, a notch 14 is provided in the rotor body 10. The portion of the rotor body 10 that is near the notch 14 forms the target for the excitation and detection coils. In the equilibrium position of Fig. 4, the magnetic field distribution will be concentrated in the notch 14. When the rotor body 10 is displaced, the magnetic field distribution will move together with the rotor body. This again will lead to different signals in the first and second detection coils 21, 22.

In all these embodiments, instead of using the first and second detection coils 21, 22 for detecting both radial and axial displacements, third detection coils 26 can be used for detecting radial displacements, while the first and second detection coils 21, 22 are used only for detecting axial displacements and possibly tilt displacements. This may simplify signal processing. In particular, each pair of first and second detection coils 21, 22 may be directly connected in an anti-series configuration to directly obtain a difference signal from each pair without the need of electronics for forming such differences.

Instead of providing a plurality of first detection coils 21 distributed along the circumference of the excitation coil 23 and corresponding second detection coils 22, it is also possible to provide just a single first detection coil 21 and a single second detection coil 22, each of these coils extending around the longitudinal axis A (or, equivalently, around the body 10). These two coils may be connected in an anti-series configuration to directly obtain a difference signal from these coils. The axial position of the body 10 can be determined in this manner in a particularly simple manner. In this case, third detection coils 26 arranged at different positions along the circumference of the excitation coil can be provided for determining radial displacements of the body.

Of course, many other configurations of the excitation and detection coils are possible. Likewise, many other configurations of the target are possible. For instance, the target does not necessarily need to have sharp edge structures.

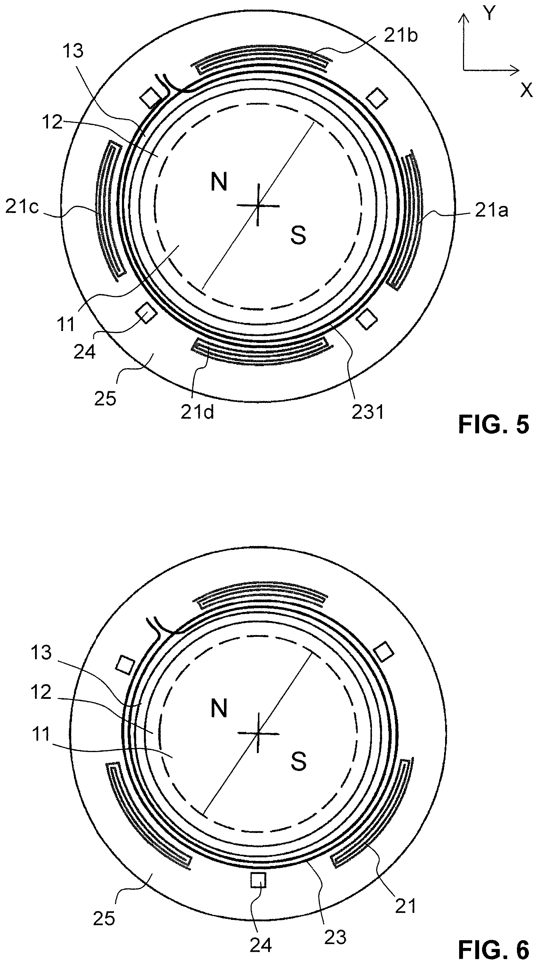

Figure 5 illustrates the arrangement of the excitation and detection coils and of the magnetic field sensors according to the second embodiment in a view from above onto the first detection plane P1. Four first detection coils 21a, 21b, 21c and 21d are evenly distributed over the circumference of the target ring 12 in the first detection plane P1. Below each first detection coil, a corresponding congruent second detection coil is arranged in the second detection plane P2. Radially offset from the detection coils towards the rotation axis A, the upper winding 231 of the excitation coil 231 is visible. The magnetic field sensors 24 are disposed between adjacent first detection coils 21a-21d along the circumference of the excitation coil 23.

In this embodiment, the detection of radial, axial and tilt displacements can be exemplified as follows: For detecting radial displacements, the signals received from each first detection coil 21a, 21b, 21c and 21d and the corresponding second detection coil are added. This results in four sum signals Σ*a*, Σ*b,* Σ*c,* and Σ*d*, one sum signal for each pair of first and second detection coils. Radial displacements along the X direction are determined based on the difference *Sx* = Σ*a* - Σ*c* between such sum signals, while radial displacements along the Y direction are determined based on the difference *Sy* = Σ*b* - Σ*d*.

For detecting axial displacements, the signals received from each pair of first and second detection coils are subtracted. This results in four difference signals Δ*a*, Δ*b,* Δ*c,* and Δ*d*, one difference signal for each pair. Axial displacements of the rotor body 10 are determined based on the sum *Sz* = Δ*a* + Δ*b* + Δ*c* + Δ*d* of these difference signals.

Tilt displacements in the X-Z plane are determined based on the difference *Tx* = Δ*a* - Δ*c* between the difference signals on opposite sides of the rotor body along the X direction. Likewise, tilt displacements in the Y-Z plane are determined based on the difference Ty = Δ*b* - Δd between the difference signals on opposite sides of the rotor body along the Y direction.

A determination of tilt displacements can be carried out with particularly high sensitivity if the diameter of the target is large compared to the axial distance D of the detection planes P1 and P2, as it is often the case with so-called disk rotors. For instance, if the diameter of the target is 10 cm, a tilt by 1° about the center of the target ring 12 will cause an axial displacement of the outer circumference at one radial side of the target ring 12 by approximately 0.9 mm and an axial displacement of equal magnitude, but different direction at the opposite radial side, which is readily detectable if the detection planes P1, P2 are spaced by not more than a few millimeters. Preferably the ratio of the diameter of the target to the axial distance between the first and second detection planes P1, P2 is at least 5, in particular at least 10, more preferably at least 20.

The magnetic field sensors 24 are operated independently of the excitation and detection coils. These sensors detect the stray magnetic field from the magnet 11 of the motor or generator. In the example of Fig. 5, four magnetic field sensor signals are obtained. The signals from each pair of diametrically opposed magnetic field sensors may be subtracted to minimize the influence of radial displacements of the rotor body 10. This results in two difference signals along two mutually orthogonal directions, from which the rotary position of the rotor body 10 can be readily determined using methods well known in the art.

Figure 6 illustrates a fourth embodiment, in which only three first detection coils 21, three second detection coils 22 (not visible in Fig. 6) and three magnetic field sensors 24 are provided. Again, sums and differences of the signals from each pair of first and second detection coils 21, 22 are formed. By forming appropriately weighted linear combinations of these sums and differences, it is readily possible to again determine radial, axial and tilt displacements of the rotor body in the same spirit as explained in conjunction with Fig. 5. By forming linear combinations of the signals of the three magnetic field sensors, signals along two mutually orthogonal directions are obtained. The rotary position of the rotor body 10 can be readily determined from these signals.

It is also possible to provide only two magnetic field sensors at two different angular positions at an angular distance that is different from 180°, or even only a single multi-axis magnetic field sensor. In this case, the signals from the magnetic field sensors will be influenced by radial displacements of the rotor body 10, and the influence cannot be compensated by forming linear combinations any more. However, this influence can still be corrected based on the radial displacement signals obtained from the detection coils 21, 22 and/or 26.

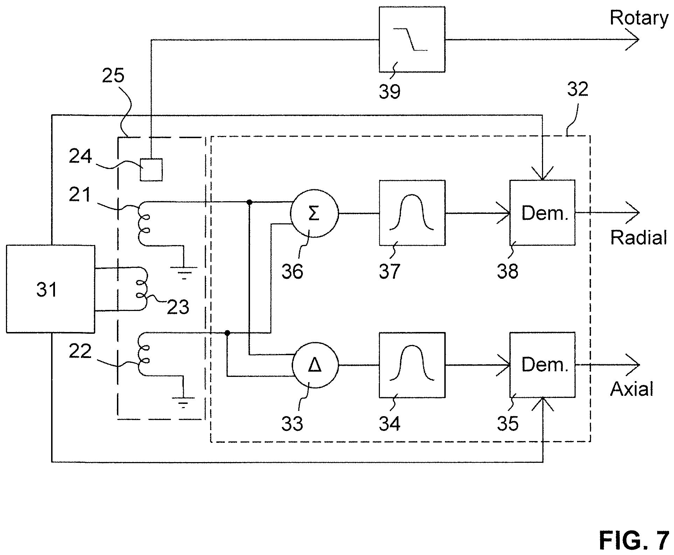

Figure 7 illustrates a possible embodiment of the processing circuitry 30. In this embodiment, the processing circuitry comprises excitation circuitry 31 and detection circuitry 32. The excitation circuitry 31 comprises an oscillator that supplies a high-frequency current to the excitation coil 23 at the excitation frequency. Voltages are induced in first and second detection coils 21, 22. The detection circuitry comprises a subtractor 33 that subtracts the voltage signals received from the first and second detection coils 21, 22 from one another, followed by a bandpass filter 34 having a center frequency at the excitation frequency to filter out any undesired disturbances. The output from the bandpass filter is fed to a demodulator/ADC 35 that demodulates the high-frequency signal to obtain a low-frequency signal that is a measure of the amplitude of the output from subtractor 33 at the excitation frequency. This signal is digitized and outputted. The output is indicative of an axial displacement of a target portion near the pair of detection coils 21, 22. Similarly, an adder 36 adds the voltage signals received from the first and second detection coils 21, 22. The output from the adder is again passed through a bandpass filter 37 and demodulated and digitized in a demodulator/ADC 38. The output is indicative of a radial position of a target portion near the pair of detection coils 21, 22. Only one pair of detection coils with the corresponding processing circuitry is shown in Fig. 7. The processing circuitry for the other pairs of detections coils is identical. The outputs of the processing circuitry for the different pairs of detection coils can then be combined and subjected to further treatment in software.

The signals from each magnetic field sensor 24 are passed through a low pass filter 39 having a cutoff frequency well below the excitation frequency and digitized in an ADC. From the output, the rotary position of the rotor body 10 can be determined. Since the bandwidth of the circuitry for determining the stray magnetic field of magnet 11 is far below the excitation frequency for the excitation and detection coils, there is negligible cross talk between the corresponding signal pathways.

It is to be understood that Fig. 7 is provided only by way of example, and that the excitation and detection circuitry can be configured in many different manners. For instance, the signal from each detection coil can be processed and digitized separately, and all further processing can be carried out fully digitally. In other embodiments, further sums and differences can be formed by analog hardware before digitization of the signals. In yet other embodiments, the detection coils can even be hardwired in a configuration that directly provides the desired sums or differences.

Many other modifications can be made without leaving the scope of the present invention as defined in the claims.

**LIST OF REFERENCE SIGNS**

| | | | |
|---|---|---|---|
| 10 | rotor body | 32 | detection circuitry |
| 11 | permanent magnet | 33 | subtractor |
| 12 | target ring | 34 | bandpass filter |
| 13 | radial gap | 35 | demodulator/ADC |
| 14 | notch | 36 | adder |
| 15 | circumferential edge | 37 | bandpass filter |
| 16 | circumferential edge | 38 | demodulator/ADC |
| 20 | sensor device | 39 | lowpass filter/ADC |
| 21 | first detection coil | A | rotation axis |
| 21a-21d | first detection coil | Z | axial direction |
| 22 | second detection coil | X, Y | radial directions |
| 23 | excitation coil | P1 | first detection plane |
| 231 | first winding | P2 | second detection plane |
| 232 | second winding | PE | excitation plane |
| 24 | magnetic field sensor | D | axial distance |
| 25 | printed circuit board | L | length of target ring |
| 26 | third detection coil | N | north pole |
| 30 | processing circuitry | S | south pole |
| 31 | excitation circuitry | | |

## Claims

1. A sensor device for determining an axial position of a body (10) along a longitudinal axis (A), the sensor device comprising:
at least one excitation coil (23) that extends around the longitudinal axis (A);
at least one first detection coil (21) arranged in the vicinity of the excitation coil (23) essentially in a first detection plane (P1) perpendicular to the longitudinal axis (A);
at least one second detection coil (22) arranged in the vicinity of the excitation coil (23) essentially in a second detection plane (P2) perpendicular to the longitudinal axis (A);
excitation circuitry (31) configured to supply the excitation coil (23) with current at an excitation frequency to create an excitation magnetic field distribution; and
detection circuitry (32) configured to determine the axial position of the body (10) based on signals from the first and second detection coils (21, 22) at the excitation frequency,
**characterized in that** the second detection plane is arranged at an axial distance to the first detection plane, and that the detection circuitry (32) is configured to base the determination of the axial position on at least one difference between the signals from the at least one first detection coil (21) and the signals from the at least one second detection coil (22).

2. The sensor device of claim 1,
comprising a plurality of first detection coils (21) arranged essentially in the first detection plane (P1) at a plurality of different angular positions around the longitudinal axis (A), and a plurality of second detection coils (22) arranged essentially in the second detection plane (P2) perpendicular to the longitudinal axis (A) at a plurality of different angular positions around the longitudinal axis (A), and/or
comprising a plurality of third detection coils (26) arranged in the vicinity of the excitation coil (23) at a plurality of different angular positions around the longitudinal axis.

3. The sensor device of claim 2,
wherein the detection circuitry is configured to determine, in addition to the axial position of the body (10), at least one of the following:
a radial position of the body (10) along at least one radial direction, in particular, based on at least one sum of signals that are detected by the first detection coils (21) and signals that are detected by the second detection coils (22) and/or based on the signals that are detected by the third detection coils (26); and
a tilt position of the body (10) around at least one radial tilt axis, in particular, based on comparing at least two differences between signals that are detected by the first detection coils (21) and signals that are detected by the second detection coils (22), each difference being formed from signals for a different angular position around the longitudinal axis (A).

4. The sensor device of any one of the preceding claims,
wherein the excitation coil (23) is arranged between the first and second detection planes (P1, P2), in particular, essentially in an excitation plane (PE) extending perpendicular to the longitudinal axis (A) and being arranged between the first and second detection planes (P1, P2), the excitation plane (PE) being arranged preferably equidistantly from the first and second detection planes (P1, P2), or
wherein the excitation coil (23) comprises first and second windings (231, 232), the first winding (231) being arranged essentially in the first detection plane (P1), and the second winding (232) being arranged essentially in the second detection plane (P2), the at least one first detection coil (21) preferably being arranged radially outside the first winding (231), and the at least one second detection coil (22) preferably being arranged radially outside the second winding (232).

5. The sensor device of any one of the preceding claims, further comprising an electrically conductive target (12) on the body (10), the target (12) having, on its outer circumference, a radial dimension that varies along the longitudinal axis (A),
wherein the excitation coil (23) and the target (12) are configured and arranged in such a manner that the excitation magnetic field distribution excites eddy currents in the target (12), the eddy currents essentially preventing the excitation magnetic field distribution from entering the target, wherein the excitation coil (23) and the first and second detection coils (21, 22), in a projection along the longitudinal direction, preferably do not overlap with those portions of the target in which the eddy currents are excited.

6. The sensor device of claim 5,
wherein the target (12) comprises a radially protruding ring on a circumferential surface of the body (10) or an annular notch in the circumferential surface, the ring or notch extending around the longitudinal axis (A), and
wherein preferably the ring or notch has a length along the longitudinal direction that is between 50% to 200% of the axial distance between the first and second detection planes, and/or wherein preferably the ring or notch, on its outer circumference, defines first and second circumferential edge structures having opposite axial orientations and having an axial distance that is 50% to 200% of the axial distance between the first and second detection planes.

7. The sensor device of claim 5 or 6, wherein the target (12) is not ferromagnetic.

8. The sensor device of any one of the preceding claims, wherein the excitation frequency is in the range from 100 kHz to 100 MHz.

9. The sensor device of any one of the preceding claims, wherein the excitation coil (23) and the first and second detection coils (21, 22) are printed coils formed on at least one printed circuit board (25).

10. The sensor device of claim 9, further comprising at least one magnetic field sensor (24), the at least one magnetic field sensor (24) being arranged on the at least one printed circuit board (25) at different angular positions around the longitudinal axis (A), the at least one magnetic field sensor being configured to detect a stray magnetic field of a magnet (11) carried by the body (10);
wherein the detection circuitry is configured to operate the at least one magnetic field sensor (24) to determine a rotary position (ϕ) of the body (10) around the longitudinal axis (A), based on signals from the at least one magnetic field sensor (24).

11. The sensor device of claim 10, wherein each magnetic field sensor (24) is arranged at an angular position that is located between adjacent detection coils (21, 22).

12. The sensor device of claim 10 or 11,
wherein the at least one magnetic field sensor (24) has an operating bandwidth that is below the excitation frequency of the excitation magnetic field distribution; and/or
wherein the detection circuitry (32) comprises at least one frequency filter for filtering out the excitation frequency from the signals detected by the at least one magnetic field sensor (24).

13. A method of determining an axial position of a body (10) along a longitudinal axis (A), the method comprising:
arranging at least one excitation coil (23) around the body (10), the excitation coil (23) extending around the longitudinal axis (A);
arranging at least one first detection coil (21) in the vicinity of the excitation coil (23) essentially in a first detection plane (P1) perpendicular to the longitudinal axis (A);
arranging at least one second detection coil (22) in the vicinity of the excitation coil (23) essentially in a second detection plane (P2) perpendicular to the longitudinal axis (A);
supplying the excitation coil (23) with current at an excitation frequency to create an excitation magnetic field distribution; and
determining the axial position of the body (10) based on signals that are detected by the first and second detection coils (21, 22) at the excitation frequency,
**characterized in that** the second detection plane is arranged at an axial distance to the first detection plane, and that the determination of the axial position is based on at least one difference between the signals that are detected by the at least one first detection coil (21) and the signals that are detected by the at least one second detection coil (22).

14. The method of claim 13, further comprising:
detecting a stray magnetic field of a magnet (11) carried by the body (10) using at least two magnetic field sensors (24), the magnetic field sensors (24) being arranged on a printed circuit board (25) at different angular positions around the longitudinal axis (A), the excitation and detection coils (21, 22, 23) being formed as printed coils on said printed circuit board (25); and
determining a rotary position (ϕ) of the body (10) around the longitudinal axis (A), based on the stray magnetic field.

## Patentansprüche

1. Sensorvorrichtung zur Bestimmung einer axialen Position eines Körpers (10) entlang einer Längsachse (A), wobei die Sensorvorrichtung umfasst:
mindestens eine Erregerspule (23), die sich um die Längsachse (A) erstreckt;
mindestens eine erste Detektionsspule (21), die in der Nähe der Erregerspule (23) im Wesentlichen in einer ersten Detektionsebene (P1) senkrecht zur Längsachse (A) angeordnet ist;
mindestens eine zweite Detektionsspule (22), die in der Nähe der Erregerspule (23) im Wesentlichen in einer zweiten Detektionsebene (P2) senkrecht zur Längsachse (A) angeordnet ist;
eine Erregerschaltung (31), die dazu ausgebildet ist, die Erregerspule (23) mit Strom bei einer Erregerfrequenz versorgt, um eine Erregermagnetfeldverteilung zu erzeugen; und
eine Detektionsschaltung (32), die dazu ausgebildet ist, die axiale Position des Körpers (10) basierend auf Signalen von der ersten und zweiten Detektionsspule (21, 22) bei der Erregungsfrequenz zu bestimmen,
**dadurch gekennzeichnet, dass** die zweite Detektionsebene in einem axialen Abstand zur ersten Detektionsebene angeordnet ist, und dass die Detektionsschaltung (32) dazu ausgebildet ist, die Bestimmung der axialen Position auf mindestens eine Differenz zwischen den Signalen der mindestens einen ersten Detektionsspule (21) und den Signalen der mindestens einen zweiten Detektionsspule (22) zu basieren.

2. Sensorvorrichtung nach Anspruch 1,
umfassend eine Vielzahl erster Detektionsspulen (21), die im Wesentlichen in der ersten Detektionsebene (P1) an mehreren unterschiedlichen Winkelpositionen um die Längsachse (A) angeordnet sind, und eine Vielzahl zweiter Detektionsspulen (22), die im Wesentlichen in der zweiten Detektionsebene (P2) senkrecht zur Längsachse (A) an mehreren unterschiedlichen Winkelpositionen um die Längsachse (A) angeordnet sind, und/oder
umfassend eine Vielzahl dritter Detektionsspulen (26), die in der Nähe der Erregerspule (23) in einer Vielzahl unterschiedlicher Winkelpositionen um die Längsachse angeordnet sind.

3. Sensorvorrichtung nach Anspruch 2,
wobei die Detektionsschaltung dazu ausgebildet ist, zusätzlich zur axialen Position des Körpers (10) mindestens eines der folgenden Merkmale zu bestimmen:
eine radiale Position des Körpers (10) entlang mindestens einer radialen Richtung, insbesondere basierend auf mindestens einer Summe von Signalen, die von den ersten Detektionsspulen (21) erfasst werden, und Signalen, die von den zweiten Detektionsspulen (22) erfasst werden, und/oder basierend auf den Signalen, die von den dritten Detektionsspulen (26) erfasst werden; und
eine Neigungsposition des Körpers (10) um mindestens eine radiale Neigungsachse, insbesondere basierend auf einem Vergleich von mindestens zwei Differenzen zwischen Signalen, die von den ersten Detektionsspulen (21) erfasst werden, und Signalen, die von den zweiten Detektionsspulen (22) erfasst werden, wobei jede Differenz aus Signalen für eine unterschiedliche Winkelposition um die Längsachse (A) gebildet wird.

4. Sensorvorrichtung nach einem der vorhergehenden Ansprüche,
wobei die Erregerspule (23) zwischen der ersten und zweiten Detektionsebene (P1, P2) angeordnet ist, insbesondere im Wesentlichen in einer senkrecht zur Längsachse (A) verlaufenden Erregerebene (PE), die zwischen der ersten und zweiten Detektionsebene (P1, P2) angeordnet ist, wobei die Erregerebene (PE) vorzugsweise äquidistant zur ersten und zweiten Detektionsebene (P1, P2) angeordnet ist, oder
wobei die Erregerspule (23) eine erste und eine zweite Wicklung (231, 232) umfasst, wobei die erste Wicklung (231) im Wesentlichen in der ersten Detektionsebene (P1) und die zweite Wicklung (232) im Wesentlichen in der zweiten Detektionsebene (P2) angeordnet ist, wobei die mindestens eine erste Detektionsspule (21) vorzugsweise radial ausserhalb der ersten Wicklung (231) und die mindestens eine zweite Detektionsspule (22) vorzugsweise radial ausserhalb der zweiten Wicklung (232) angeordnet ist.

5. Sensorvorrichtung nach einem der vorhergehenden Ansprüche, die ferner ein elektrisch leitendes Target (12) auf dem Körper (10) umfasst, wobei das Target (12) an seinem Aussenumfang eine radiale Abmessung aufweist, die sich entlang der Längsachse (A) ändert,
wobei die Erregerspule (23) und das Target (12) so konfiguriert und angeordnet sind, dass die Erregermagnetfeldverteilung Wirbelströme im Target (12) anregt, wobei die Wirbelströme im Wesentlichen verhindern, dass die Erregermagnetfeldverteilung in das Target eindringt, wobei die Erregerspule (23) und die erste und zweite Detektionsspule (21, 22) in einer Projektion entlang der Längsrichtung vorzugsweise nicht mit denjenigen Abschnitten des Targets überlappen, in denen die Wirbelströme angeregt werden.

6. Sensorvorrichtung nach Anspruch 5,
wobei das Target (12) einen radial vorstehenden Ring auf einer Umfangsfläche des Körpers (10) oder eine ringförmige Kerbe in der Umfangsfläche umfasst, wobei sich der Ring oder die Kerbe um die Längsachse (A) herum erstreckt, und
wobei vorzugsweise der Ring oder die Kerbe eine Länge entlang der Längsrichtung hat, die zwischen 50 % und 200 % des axialen Abstands zwischen der ersten und der zweiten Detektionsebene beträgt, und/oder wobei vorzugsweise der Ring oder die Kerbe an seinem/ihrem Aussenumfang eine erste und eine zweite Umfangskantenstruktur definiert, die entgegengesetzte axiale Ausrichtungen haben und einen axialen Abstand haben, der 50 % bis 200 % des axialen Abstands zwischen der ersten und der zweiten Detektionsebene beträgt.

7. Sensorvorrichtung nach Anspruch 5 oder 6, wobei das Target (12) nicht ferromagnetisch ist.

8. Sensorvorrichtung nach einem der vorhergehenden Ansprüche, wobei die Erregerfrequenz im Bereich von 100 kHz bis 100 MHz liegt.

9. Sensorvorrichtung nach einem der vorhergehenden Ansprüche, wobei die Erregerspule (23) und die erste und zweite Detektionsspule (21, 22) gedruckte Spulen sind, die auf mindestens einer Leiterplatte (25) ausgebildet sind.

10. Sensorvorrichtung nach Anspruch 9, weiter umfassend mindestens einen Magnetfeldsensor (24), wobei der mindestens eine Magnetfeldsensor (24) auf der mindestens einen Leiterplatte (25) an verschiedenen Winkelpositionen um die Längsachse (A) herum angeordnet ist, wobei der mindestens eine Magnetfeldsensor dazu ausgebidlet ist, ein magnetisches Streufeld eines von dem Körper (10) getragenen Magneten (11) zu erfassen;
wobei die Detektionsschaltung dazu ausgebildet ist, den mindestens einen Magnetfeldsensor (24) zu betreiben, um eine Drehposition (ϕ) des Körpers (10) um die Längsachse (A) zu bestimmen, basierend auf Signalen von dem mindestens einen Magnetfeldsensor (24).

11. Sensorvorrichtung nach Anspruch 10, wobei jeder Magnetfeldsensor (24) an einer Winkelposition angeordnet ist, die sich zwischen benachbarten Detektionsspulen (21, 22) befindet.

12. Sensorvorrichtung nach Anspruch 10 oder 11,
wobei der mindestens eine Magnetfeldsensor (24) eine Betriebsbandbreite aufweist, die unterhalb der Erregerfrequenz der Erregermagnetfeldverteilung liegt; und/oder
wobei die Detektionsschaltung (32) mindestens einen Frequenzfilter zum Herausfiltern der Erregungsfrequenz aus den von dem mindestens einen Magnetfeldsensor (24) erfassten Signalen umfasst.

13. Verfahren zur Bestimmung einer axialen Position eines Körpers (10) entlang einer Längsachse (A), wobei das Verfahren umfasst:
Anordnen mindestens einer Erregerspule (23) um den Körper (10), wobei sich die Erregerspule (23) um die Längsachse (A) erstreckt;
Anordnen mindestens einer ersten Detektionsspule (21) in der Nähe der Erregerspule (23) im Wesentlichen in einer ersten Detektionsebene (P1) senkrecht zur Längsachse (A);
Anordnen mindestens einer zweiten Detektionsspule (22) in der Nähe der Erregerspule (23) im Wesentlichen in einer zweiten Detektionsebene (P2) senkrecht zur Längsachse (A);
Versorgen der Erregerspule (23) mit Strom bei einer Erregungsfrequenz, um eine Erregungsmagnetfeldverteilung zu erzeugen; und
Bestimmen der axialen Position des Körpers (10) auf der Grundlage von Signalen, die von der ersten und zweiten Detektionsspule (21, 22) bei der Erregungsfrequenz erfasst werden,
**dadurch gekennzeichnet, dass** die zweite Detektionsebene in einem axialen Abstand zur ersten Detektionsebene angeordnet ist, und dass die Bestimmung der axialen Position auf mindestens einer Differenz zwischen den Signalen, die von der mindestens einen ersten Detektionsspule (21) erfasst werden, und den Signalen, die von der mindestens einen zweiten Detektionsspule (22) erfasst werden, basiert.

14. Verfahren nach Anspruch 13, weiter umfassend:
Erfassen eines magnetischen Streufelds eines von dem Körper (10) getragenen Magneten (11) unter Verwendung von mindestens zwei Magnetfeldsensoren (24), wobei die Magnetfeldsensoren (24) auf einer Leiterplatte (25) an unterschiedlichen Winkelpositionen um die Längsachse (A) herum angeordnet sind, wobei die Erregungs- und Detektionsspulen (21, 22, 23) als gedruckte Spulen auf der Leiterplatte (25) ausgebildet sind; und
Bestimmen einer Drehposition (ϕ) des Körpers (10) um die Längsachse (A), basierend auf dem magnetischen Streufeld.

## Revendications

1. Dispositif de détection pour déterminer une position axiale d'un corps (10) le long d'un axe longitudinal (A), le dispositif de détection comprenant:
au moins une bobine d'excitation (23) qui s'étend autour de l'axe longitudinal (A);
au moins une première bobine de détection (21) disposée à proximité de la bobine d'excitation (23) essentiellement dans un premier plan de détection (P1) perpendiculaire à l'axe longitudinal (A);
au moins une deuxième bobine de détection (22) disposée à proximité de la bobine d'excitation (23) essentiellement dans un deuxième plan de détection (P2) perpendiculaire à l'axe longitudinal (A);
un circuit d'excitation (31) configuré pour alimenter la bobine d'excitation (23) en courant à une fréquence d'excitation pour créer une distribution de champ magnétique d'excitation; et
un circuit de détection (32) configuré pour déterminer la position axiale du corps (10) sur la base de signaux provenant des premières et secondes bobines de détection (21, 22) à la fréquence d'excitation,
**caractérisé en ce que** le deuxième plan de détection est disposé à une distance axiale du premier plan de détection, et **en ce que** le circuit de détection (32) est configuré pour baser la détermination de la position axiale sur au moins une différence entre les signaux provenant de la au moins une première bobine de détection (21) et les signaux provenant de la au moins une deuxième bobine de détection (22).

2. Dispositif de détection selon la revendication 1,
comprenant une pluralité de premières bobines de détection (21) disposées essentiellement dans le premier plan de détection (P1) à une pluralité de positions angulaires différentes autour de l'axe longitudinal (A), et une pluralité de secondes bobines de détection (22) disposées essentiellement dans le second plan de détection (P2) perpendiculaire à l'axe longitudinal (A) à une pluralité de positions angulaires différentes autour de l'axe longitudinal (A), et/ou
comprenant une pluralité de troisièmes bobines de détection (26) disposées à proximité de la bobine d'excitation (23) à une pluralité de positions angulaires différentes autour de l'axe longitudinal.

3. Dispositif de détection selon la revendication 2,
dans lequel le circuit de détection est configuré pour déterminer, en plus de la position axiale du corps (10), au moins un des éléments suivants:
une position radiale du corps (10) le long d'au moins une direction radiale, en particulier, sur la base d'au moins une somme des signaux qui sont détectés par les premières bobines de détection (21) et des signaux qui sont détectés par les deuxièmes bobines de détection (22) et/ou sur la base des signaux qui sont détectés par les troisièmes bobines de détection (26); et
une position d'inclinaison du corps (10) autour d'au moins un axe d'inclinaison radial, en particulier, sur la base de la comparaison d'au moins deux différences entre des signaux qui sont détectés par les premières bobines de détection (21) et des signaux qui sont détectés par les secondes bobines de détection (22), chaque différence étant formée à partir de signaux pour une position angulaire différente autour de l'axe longitudinal (A).

4. Dispositif de détection selon l'une quelconque des revendications précédentes,
dans lequel la bobine d'excitation (23) est disposée entre les premier et deuxième plans de détection (P1, P2), en particulier, essentiellement dans un plan d'excitation (PE) s'étendant perpendiculairement à l'axe longitudinal (A) et étant disposé entre les premier et deuxième plans de détection (P1, P2), le plan d'excitation (PE) étant disposé de préférence à équidistance des premier et deuxième plans de détection (P1, P2) ou
dans lequel la bobine d'excitation (23) comprend des premier et second enroulements (231, 232), le premier enroulement (231) étant disposé essentiellement dans le premier plan de détection (P1), et le second enroulement (232) étant disposé essentiellement dans le second plan de détection (P2), la au moins une première bobine de détection (21) étant de préférence disposée radialement à l'extérieur du premier enroulement (231), et la au moins une seconde bobine de détection (22) étant de préférence disposée radialement à l'extérieur du second enroulement (232).

5. Dispositif de détection selon l'une quelconque des revendications précédentes, comprenant en outre une cible électriquement conductrice (12) sur le corps (10), la cible (12) ayant, sur sa circonférence extérieure, une dimension radiale qui varie le long de l'axe longitudinal (A),
dans lequel la bobine d'excitation (23) et la cible (12) sont configurées et disposées de telle sorte que la distribution du champ magnétique d'excitation excite des courants de Foucault dans la cible (12), les courants de Foucault empêchant essentiellement la distribution du champ magnétique d'excitation de pénétrer dans la cible, dans lequel la bobine d'excitation (23) et les premières et deuxièmes bobines de détection (21, 22), dans une projection le long de la direction longitudinale, ne chevauchent de préférence pas les parties de la cible dans lesquelles les courants de Foucault sont excités.

6. Dispositif de détection selon la revendication 5,
dans lequel la cible (12) comprend un anneau faisant saillie radialement sur une surface circonférentielle du corps (10) ou une encoche annulaire dans la surface circonférentielle, l'anneau ou l'encoche s'étendant autour de l'axe longitudinal (A), et
dans lequel, de préférence, l'anneau ou l'encoche a une longueur le long de la direction longitudinale qui est comprise entre 50 % et 200 % de la distance axiale entre les premiers et seconds plans de détection, et/ou dans lequel, de préférence, l'anneau ou l'encoche, sur sa circonférence extérieure, définit des premières et secondes structures de bord circonférentielles ayant des orientations axiales opposées et ayant une distance axiale qui est comprise entre 50 % et 200 % de la distance axiale entre les premiers et seconds plans de détection.

7. Dispositif de détection selon la revendication 5 ou 6, dans lequel la cible (12) n'est pas ferromagnétique.

8. Dispositif de détection selon l'une quelconque des revendications précédentes, dans lequel la fréquence d'excitation est dans la gamme de 100 kHz à 100 MHz.

9. Dispositif de détection selon l'une quelconque des revendications précédentes, dans lequel la bobine d'excitation (23) et les premières et deuxièmes bobines de détection (21, 22) sont des bobines imprimées formées sur au moins une carte de circuit imprimé (25).

10. Dispositif de détection selon la revendication 9, comprenant en outre au moins un capteur de champ magnétique (24), le au moins un capteur de champ magnétique (24) étant disposé sur la au moins une carte de circuit imprimé (25) à différentes positions angulaires autour de l'axe longitudinal (A), le au moins un capteur de champ magnétique étant configuré pour détecter un champ magnétique parasite d'un aimant (11) porté par le corps (10);
dans lequel le circuit de détection est configuré pour faire fonctionner le au moins un capteur de champ magnétique (24) pour déterminer une position de rotation (ϕ) du corps (10) autour de l'axe longitudinal (A), sur la base de signaux provenant du au moins un capteur de champ magnétique (24).

11. Dispositif de détection selon la revendication 10, dans lequel chaque capteur de champ magnétique (24) est disposé à une position angulaire qui est située entre des bobines de détection adjacentes (21, 22).

12. Dispositif de détection selon la revendication 10 ou 11,
dans lequel le au moins un capteur de champ magnétique (24) a une largeur de bande passante de fonctionnement qui est inférieure à la fréquence d'excitation de la distribution du champ magnétique d'excitation; et/ou
dans lequel le circuit de détection (32) comprend au moins un filtre de fréquence pour éliminer par filtrage la fréquence d'excitation des signaux détectés par le au moins un capteur de champ magnétique (24).

13. Procédé pour déterminer une position axiale d'un corps (10) le long d'un axe longitudinal (A), le procédé comprenant:
disposer au moins une bobine d'excitation (23) autour du corps (10), la bobine d'excitation (23) s'étendant autour de l'axe longitudinal (A);
disposer au moins une première bobine de détection (21) à proximité de la bobine d'excitation (23) essentiellement dans un premier plan de détection (P1) perpendiculaire à l'axe longitudinal (A);
disposer au moins une deuxième bobine de détection (22) à proximité de la bobine d'excitation (23) essentiellement dans un deuxième plan de détection (P2) perpendiculaire à l'axe longitudinal (A);
alimenter la bobine d'excitation (23) en courant à une fréquence d'excitation pour créer une distribution de champ magnétique d'excitation; et
déterminer la position axiale du corps (10) sur la base de signaux qui sont détectés par les premières et secondes bobines de détection (21, 22) à la fréquence d'excitation,
**caractérisé en ce que** le deuxième plan de détection est disposé à une distance axiale du premier plan de détection, et **en ce que** la détermination de la position axiale est basée sur au moins une différence entre les signaux qui sont détectés par la au moins une première bobine de détection (21) et les signaux qui sont détectés par la au moins une deuxième bobine de détection (22).

14. Procédé selon la revendication 13, comprenant en outre:
détecter un champ magnétique parasite d'un aimant (11) porté par le corps (10) en utilisant au moins deux capteurs de champ magnétique (24), les capteurs de champ magnétique (24) étant disposés sur une carte de circuit imprimé (25) à différentes positions angulaires autour de l'axe longitudinal (A), les bobines d'excitation et de détection (21, 22, 23) étant formées comme des bobines imprimées sur ladite carte de circuit imprimé (25); et
déterminer une position de rotation (ϕ) du corps (10) autour de l'axe longitudinal (A), sur la base du champ magnétique parasite.
